# DEMANDE DE BREVET EUROPEEN

(11) **EP 2 511 734 A2**
(43) Date de publication de la demande: **17.10.2012**
(21) Numéro de dépôt: 12162735.0
(22) Date de dépôt: 30.03.2012
(51) Int. Cl.: G01S 19/22, G01S 19/32, G01S 19/37

(54) **Récepteur bi-fréquences de positionnement par satellites et procédé de réception associé**

(30) Priorité: 14.04.2011 FR 1101166
(71) Demandeur: Thales, 92200 Neuilly Sur Seine (FR)
(72) Inventeur: Revol, Marc, 26120 UPIC (FR)
(74) Mandataire: Brunelli, Gérald

(57) **Abrégé**

Récepteur bi-fréquences (L1, L2) de positionnement par satellites, comprenant un canal de mesure principal (L1) et un canal secondaire (L2) pour un calcul de correction de la propagation ionosphérique robuste aux erreurs différentielles liées à l'environnement local de réception des signaux, chaque canal comprenant un générateur de code, un générateur de phase de porteuse, des intégrateurs, des discriminateurs de phase et de code, un oscillateur à commande numérique de phase de code (NCOC), un oscillateur à commande numérique de phase de porteuse (NCOP), des moyens de filtrage adaptés de boucle de phase de porteuse, et des moyens de filtrage adaptés de boucle de phase de code, comprenant, en outre :
- des moyens de détermination des erreurs de phases respectives sur lesdits canaux principal et secondaire comprenant des moyens de corrélation interspectrale (INT3, M3) des signaux des canaux principal et secondaire (L1, L2) déjà corrélés par le code local, après compensation en fréquence des décalages Doppler relatifs desdits signaux ; et
- des boucles (B1, B2) respectives de rétroaction desdites erreurs de phases de code et de porteuse sur lesdits canaux principal et secondaire.

## Description

La présente invention porte sur l'amélioration de la robustesse vis-à-vis des trajets multiples un récepteur bi-fréquences de positionnement par satellites

Les mesures de pseudo-distances et de phases de signaux d'un système global de navigation par satellites, ou GNSS pour "Global Navigation Satellite System" en langue anglaise, à des fins de localisation et de mesure d'attitude, peuvent être entachées de fortes erreurs, si l'environnement de propagation modifie l'hypothèse de trajectoire rectiligne directe entre les satellites et le récepteur.

Cela peut, par exemple, être le cas lors de réflexions multiples des signaux (trajets multiples) ou lors de masquages ou obturations (modulation de pale en cas d'installation sur un hélicoptère).

Les récepteurs modernes intègrent généralement des traitements spécifiques d'une fonction de corrélation également appelés discriminateurs pour diminuer l'impact des effets des trajets multiples sur la mesure de temps reçu (par amélioration du discriminateur de code des boucles de poursuite de code ou DLL pour "Delay Lock Loop" en langue anglo-saxonne), mais ces traitements ont un domaine d'efficacité restreint (par exemple selon le retard des trajets) et n'entrainent qu'une faible amélioration des erreurs de phase de porteuse. De plus, les extensions du système GPS et les nouveaux systèmes GNSS basent le contrôle de l'intégrité des signaux essentiellement sur la cohérence des mesures de pseudo-distances et non sur les mesures des phases de porteuse.

Or la phase des signaux GNSS est appelée à être de plus en plus utilisées pour des applications de localisation à haute précision (RTK pour "Real Time Kinematic" en langue anglo-saxonne) et de mesure d'attitude à antennes multiples.

Des méthodes avancées connues pour réduire des erreurs de trajets multiples sur les pseudo-distances, se servent de la forme de la fonction de corrélation, telles les méthodes Double -Delta, MEDLL, ou narrow-correlator.

Toutefois, ces méthodes restent liées à des modèles de propagation (réflexion spéculaires, fonction de corrélation triangulaires, ...)

Un but de l'invention est d'améliorer à la fois les mesures de pseudo-distances et de phases, ainsi que de contribuer à augmenter la cohérence des mesures de phases de code et de porteuse ainsi obtenues.

Il est proposé, selon un aspect de l'invention, un récepteur bi-fréquences de positionnement par satellites, comprenant un canal de mesure principal et un canal secondaire pour un calcul de correction de la propagation ionosphérique robuste aux erreurs différentielles de phase liées à l'environnement local de réception des signaux. Chaque canal comprend un générateur de phase de code, un générateur de phase de porteuse, des intégrateurs, des discriminateurs de phase et de code, un oscillateur à commande numérique de phase de code, un oscillateur à commande numérique de phase de porteuse , des moyens de filtrage adaptés de boucle de phase de porteuse, et des moyens de filtrage adaptés de boucle de phase de code. Le récepteur comprend, en outre :
des moyens de détermination des erreurs de phases de code et de porteuse respectives sur lesdits canaux principal et secondaire comprenant des moyens de corrélation interspectrale des signaux des canaux principal et secondaire déjà corrélés par le code local, après compensation en fréquence des décalages Doppler relatifs desdits signaux; et
des boucles respectives de rétroaction desdites erreurs de phases de code et de porteuse sur lesdits canaux principal et secondaire.

Un tel récepteur permet d'éliminer les erreurs liées à l'existence de trajets multiples sur les deux canaux de fréquence, fournissant ainsi une amélioration à la fois des mesures de pseudo-distance et de phase, et contribue à augmenter l'intégrité des mesures de phases de porteuse et de code ainsi obtenues.

Ce produit interspectral des canaux de fréquence permet d'identifier au sein de chacun les signaux obtenus en bande de base (résultant de la corrélation par les codes locaux), les erreurs corrélées liées aux modes de propagation (trajets multiples) communes aux deux fréquences de réception. En particulier, elle permet d'identifier des erreurs qui ne sont pas forcément liées à des réflexions spéculaires simples, qui se traduisent par une composition complexe des termes d'amplitude et de phase des différents signaux reçus. Ce terme d'erreur complexe, également appelé fonction de transfert du canal de propagation est alors utilisé pour recomposer un code local adapté au canal de propagation, cohérent de cette erreur de propagation complexe.

Le présent récepteur divulgue de nouveaux signaux "ouverts", i.e. non cryptés, multi-fréquences tels que L1C, L2C, L5 pour le GPS ou Galileo (L1 BC, E6BC, E5a et E5b), qui permettent de réaliser l'intercorrélation entre canaux de fréquences sur les signaux démodulés, obtenus après filtrage adapté, ceci sans perte de rapport signal à bruit (nul besoin de traitement préalable du code P).

Cette intercorrélation ou corrélation interspectrale a pour principal but l'identification des caractéristiques des trajets multiples spéculaires et la correction des erreurs qui en découlent sur les discriminateur de code , sous l'hypothèse qu'elles sont communes aux deux canaux de fréquence. L'hypothèse de traitement suppose que les trajets multiples de propagation sont identiques sur les deux fréquences, et qu'ils sont identifiables après filtrage adapté sous la forme d'une sommation de trajets atténués, retardés et affectés de Doppler différents.

Dans un mode de réalisation adapté au cas de récepteurs fixes ou lentement mobiles présentant des erreurs de trajets multiples lentement variables, l'observation de la réponse du canal est réalisée chaque seconde à moyen terme (sur un horizon glissant de environ 10 à 20 secondes) dans une bande de 50Hz sur chaque canal de fréquence par analyse spectrale (par FFT de 512 à 1024 points) du signal obtenu en sortie de filtrage adapté après intégration cohérente d'une durée de 20 ms .Dans un autre mode de réalisation adapté au cas de récepteurs mobiles présentant des erreurs de trajets multiples rapidement variables (typiquement de 1 Hz à 1000 Hz), l'observation de la réponse du canal est réalisée chaque seconde à court terme (sur un horizon de environ 1 seconde) sur chaque canal de fréquence par analyse spectrale (par FFT de 1024) du signal obtenu en sortie de filtrage adapté après intégration cohérente courte d'une durée de 1 ms .

La correction du canal de propagation consiste à réaliser, préalablement à la corrélation avec le signal reçu, la multiplication temporelle du code local avec la réponse complexe conjuguée du canal de propagation.

L'implémentation de cette correction du canal est réalisée dans le domaine comme suit :
analyse spectrale (par transformation de Fourier ou FFT) à fenêtre glissante par pas de 1 seconde, réalisée sur les signaux démodulés obtenus après filtrage adapté et pré-intégration, pour chacune des deux voies de fréquence
identification par produit interspectral (des sorties des transformations de Fourier) des caractéristiques communes de propagation (spectre du canal de propagation) aux deux canaux de fréquences,
transformation de Fourier inverse de ce produit par DFT⁻¹ pour estimation dans le domaine temporel de la réponse complexe du canal de propagation, au rythme de la seconde-,
multiplication au rythme du calcul de la DFT⁻¹, entre la réponse temporelle complexe conjuguée du canal de propagation et le code local,
multiplication du signal reçu par le code local (P et E-L) conjugué ainsi obtenu"

Ainsi, l'amélioration de l'estimation du retard de propagation ionosphérique est une conséquence dérivée de la revendication de la correction des erreurs du canal de propagation; le retard de propagation ionosphérique est estimé à court terme (de l'ordre de chaque seconde) à partir des mesures instantanées de pseudo-distance réalisées sur les deux fréquences, après correction du canal de propagation (de l'ordre de quelques dizaines de seconde).

Dans un mode de réalisation, lesdits moyens de détermination comprennent des moyens de compensation en effet Doppler desdits signaux.

Ainsi, la phase d'erreur des signaux de propagation complexes, obtenus après démodulation par le code local sur chacun des canaux de fréquence dépendant de la fréquence de la porteuse de réception, peut être compensée en fonction de l'écart de fréquence entre les deux voies afin de traduire uniquement les erreurs de retard, supposées identiques pour les trajets de propagation multiples reçus sur les deux voies de fréquence.

Selon un mode de réalisation, lesdits moyens de détermination comprennent des moyens de compensation du signal de sortie desdits moyens dédiés d'intercorrélation par les erreurs de phases de porteuses respectives desdits signaux, spécifiques à l'environnement local de réception pour une part et à la propagation du signal pour l'autre part, pour transmettre les signaux résultants dans lesdites boucles.

Ainsi, la compensation du signal d'erreur de sortie des boucles de poursuite de phase de porteuse par les estimations des erreurs de phase porteuses (ϕ1 et ϕ2), obtenue après corrélation par chacun des codes locaux moyennées dans la bande de pré-détection sur les fréquences L1 et L2, permet de compenser, après multiplication du signal d'erreur résultant, représentant l'estimée de la fonction de transfert du canal de propagation, avec le code généré localement, les erreurs parasites introduites par le canal de propagation du signal (trajets multiples). Les signaux ainsi obtenus représentent les erreurs de phases, observées par exemple dans une bande se 50Hz (correspondant à l'intégration cohérente de 20ms), liées aux perturbations de propagation seules.

Selon un autre aspect de l'invention, il est également proposé un procédé de réception bi-fréquences de positionnement par satellites, par un canal de mesure principal et un canal secondaire pour calculer une correction de la propagation ionosphérique, dans lequel on :
détermine des erreurs de phases de code et de porteuse respectives sur lesdits canaux principal et secondaire par corrélation interspectrale des signaux des canaux principal et secondaire déjà corrélés par le code local, après compensation en fréquence des décalages Doppler relatifs desdits signaux ; et
on effectue des boucles respectives de rétroaction desdites erreurs de phases de code et de porteuse sur lesdits canaux principal et secondaire.

L'invention sera mieux comprise à l'étude de quelques modes de réalisation décrits à titre d'exemples nullement limitatifs et illustrés par les dessins annexés sur lesquels :
la figure 1 qui illustre schématiquement un récepteur selon un aspect de l'invention ; et
la figure 2 illustre un mode de réalisation du module de corrélation interspectrale comprenant le troisième multiplicateur M3 et le troisième intégrateur INT3.

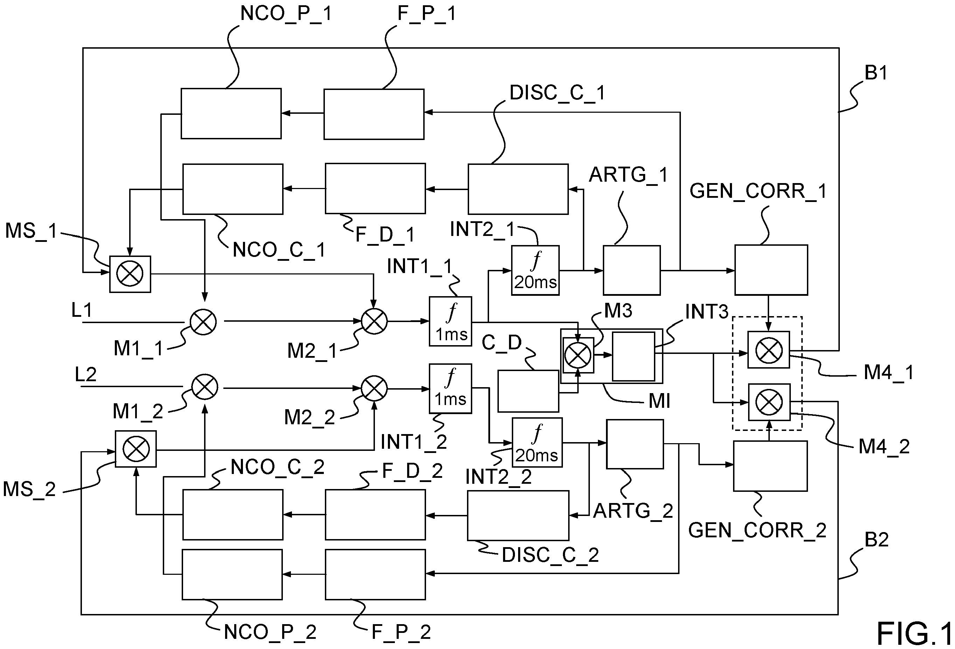

Sur la figure 1 est illustré schématiquement le traitement d'une voie de poursuite limitée à un satellite d'un récepteur bi-fréquences L1, L2 de positionnement par satellites.

Le récepteur comprend un canal de mesure principal L1 et un canal secondaire L2 pour un calcul de correction de la propagation ionosphérique.

Les canaux principal L1 et secondaire L2 comprennent respectivement des premiers multiplicateurs M1_1 et M1_2 pour multiplier les signaux respectifs en entrée des canaux principal L1 et secondaire L2, par les signaux des boucles respectives de poursuite de phase de porteuse ou PLL pour "Phase Lock Loop" en langue anglo-saxonne.

Les canaux principal L1 et secondaire L2 comprennent respectivement des deuxièmes multiplicateurs M2_1 et M2_2 pour multiplier les signaux respectifs de sortie des premiers multiplicateurs M1_1 et M1_2, par les signaux des boucles respectives de poursuite de code ou DLL pour "Delay Lock Loop" en langue anglo-saxonne.

Des premiers intégrateurs INT1_1, INT1_2, sont respectivement disposés en sortie des deuxièmes multiplicateurs M2_1 et M2_2 pour réaliser la corrélation avec le signal reçu sur la longueur du code local, sur une durée de l'ordre de 1 ms.

Des deuxièmes intégrateurs INT2_1, INT2_2, intégrant sur une durée de l'ordre de 20 ms, sont respectivement disposés en sortie des premiers intégrateurs INT1_1, INT1_2.

Les signaux de sortie des deuxièmes intégrateurs INT2_1, INT2_2, sont respectivement transmis dans les boucles de poursuite de code, qui comprennent chacune respectivement un discriminateur de code DISC_C_1, DISC_C_2, suivi d'un filtre F_D_1, F_D_2, suivi d'un oscillateur à commande numérique NCO_C_1, NCO_C_2, dont la sortie est transmise au deuxième multiplicateur M2_1, M2_2.

Les signaux de sortie des deuxièmes intégrateurs INT2_1 et INT2_2 sont également respectivement transmis dans les boucles de poursuite de phase, qui comprennent chacune respectivement un discriminateur arctangeante ARTG_1, ARTG_2, délivrant en sortie une estimation de l'erreur de phase de porteuse ϕ₁, ϕ₂, suivi d'un filtre F_P_1, F_P_2, suivi d'un oscillateur à commande numérique NCO_P_1, NCO_P_2, dont la sortie est transmise au premier multiplicateur M1_1, M1_2.

Le signal de sortie du premier intégrateur INT1_2 du canal secondaire L2 est également transmis à un module de compensation C_D des fréquences relatives des canaux principal L1 et secondaire L2 pour recaler le décalage Doppler des signaux d'erreurs en sortie du premier intégrateur INT1_2 du canal secondaire L2.

Elle a pour but de ramener les erreurs de phase obtenues après corrélation du code local sur chaque voie de fréquence (qui dépendent de la fréquence de porteuse) dans une même échelle de phase représentative des retards et des décalages Doppler des trajets multiples.

Le signal de sortie du module de compensation C_D et le signal de sortie du premier intégrateur INT1_1 du canal principal L1 sont transmis à un troisième multiplicateur M3 dont le signal de sortie est transmis à un troisième intégrateur INT3, intégrant sur une durée de l'ordre de 1 seconde (récepteurs mobiles) à 20secondes (récepteurs fixes). Ainsi, les erreurs communes corrélées qui apparaissent, par exemple des défauts de propagation identiques tels des trajets multiples, sont isolées du bruit.

Le troisième multiplicateur M3 et le troisième intégrateur INT3 forment un module d'intercorrélation ou de corrélation interspectrale MI des signaux des canaux principal et secondaire L1, L2 corrélés par le code local, après compensation des fréquences relatives desdits signaux.

En fait, les opérations de compensation de décalage Doppler et de corrélation des deux voies de fréquence sont effectuées, selon le mode de réalisation proposé, par passage dans le domaine spectral par transformation de Fourier ou FFT, ce qui permet de compenser les échelles de fréquence par simple interpolation spectrale et d'effectuer la corrélation, par multiplication dans le domaine spectral et retour en temporel transformée de Fourrier inverse ou FFT⁻¹.

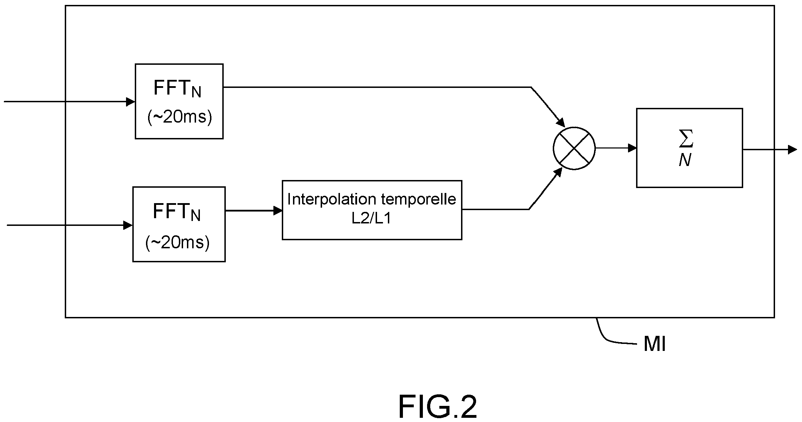

Comme illustré sur la figure 2, les transformations de Fourrier par FFT complexes sont appliquées sur chacun des signaux d'entrée échantillonnés soit à 1 kHz (directement issus de la corrélation avec le code local de longueur 1ms) adapté au cas d'une récepteur mobile, soit à 50Hz (après pré-intégration d'une durée de 20ms des sortie de corrélation avec le code local) adapté au cas d'un récepteur fixe..

Une interpolation en amplitude du spectre est réalisée selon l'axe des fréquences sur le spectre obtenu de façon à ramener les échantillons de fréquence à des échantillons de vitesse Doppler identiques (permettant ainsi de faire correspondre à une même vitesse Doppler les échantillons kᵢ de l'échelle du spectre du canal secondaire L2 avec les valeurs interpolées aux valeurs kᵢ.F1/F2. de l'échelle du spectre du canal principal L1).

Les valeurs complexes des deux spectres peuvent alors être multipliées après conjugaison complexe du spectre du canal L2 et la sortie de la corrélation à retard nul est obtenue par transformée de Fourier discrète inverse ou DFT⁻¹ du spectre résultant sur le domaine de fréquence.

La figure 2 illustre schématiquement un mode de réalisation du module de corrélation interspectrale MI. Elle précise comment est réalisée la corrélation entre les sorties à 1 kHz ou à 50Hz des deux opérations de corrélation par les codes locaux (filtrage adapté par les codes locaux).

La corrélation interspectrale est réalisée par passage dans le domaine spectral par transformation de Fourrier FFT sur une longueur de N points, soit environ 10 à 20 s dans le cas d'un récepteur fixe ou de 1 s dans le cas d'un récepteur mobile.

Dans le cas des signaux GPS, il est important que la tranche de signal obtenue en sortie de l'intégrateur du filtrage adapté retenue sur la transformation de Fourrier FFT soit synchronisée avec les données (typiquement, au rythme de 20ms dans le cas GPS correspondant à la durée d'un bit de donnée), que les données soient préalablement démodulées et que les deux transformations de Fourrier FFT soient elles-mêmes réalisées de façon synchrone sur les deux voies de fréquences.

La synchronisation des tranches de transformation de Fourrier FFT est déterminée lors de la phase de synchronisation des données pendant la phase d'acquisition.

En revanche, dans le cas des signaux des futurs systèmes, qui comportent une voie pilote (sans données), il n'est plus nécessaire de réaliser une telle démodulation des bits de données, le rythme de prélèvement en sortie de filtrage adapté et le nombre de points de FFT pouvant être quelconques.

L'interpolation consiste à réaligner les décalage Doppler résultant des transformations de Fourrier FFT des deux voies de fréquences de sorte à compenser l'écart dû aux différences de fréquences porteuses, de façon à ce qu'un même trajet réfléchi arrivant avec le même retard et la même vitesse relative par rapport au signal direct puisse être sommé en cohérence dans le domaine des fréquences.

Une fois l'interpolation réalisée, les opérations de produit (complexe) entre le spectre complexe de la voie L1 et le spectre complexe conjugué de la voie L2 et de sommation (dans le domaine fréquentiel) des échantillons permettent de réaliser l'équivalent d'une corrélation temporelle (pour la valeur à retard nul).

Le recalage dans le domaine spectral des échelles Doppler permet ainsi de renforcer toutes les distorsions de phase liées à la propagation du signal (supposée commune sur les deux canaux de fréquence), et de réduire les seules contributions du bruit (incohérente entre fréquence).

L'erreur de phase résultante est alors représentative des seuls défauts de propagation du signal, en vue d'adapter au mieux le code local à ces défauts du signal reçu.

Les signaux d'estimation des erreurs de phases de porteuses ϕ₁, ϕ₂ de sortie des discriminateurs arctangeante ARTG_1, ARTG_2, des canaux principal L1 et secondaire L2, sont également respectivement transmis à des générateurs GEN_CORR_1 et GEN_CORR_2 de signal de correction. Les générateurs GEN_CORR_1 et GEN_CORR_2 permettent la génération, pour chaque voie de fréquence, d'un signal complexe de correction de l'évolution de la phase de porteuse représentant la seule contribution de la dynamique du porteur (estimée après intégration sur 20ms de la phase). Ce signal est appliqué, à la cadence de 50 Hz, en opposition de phase (signal complexe conjugué) afin d'éliminer la contribution de la dynamique du porteur à l'erreur de phase instantanée de sorte à ne conserver que les erreurs liées aux trajets multiples. Le signal résultant calculé à la cadence de 50 Hz dépend alors des seules contributions à l'erreur de sortie des perturbations de propagation du signal d'arrivée.

Le signal de sortie du troisième intégrateur INT3 est transmis au rythme de la seconde à deux quatrièmes multiplicateurs M4_1 et M4_2. Le quatrième multiplicateur M4_1 reçoit également, au rythme de 50 Hz, le signal de correction de sortie du générateur GEN_CORR_1, et le quatrième multiplicateur M4_2 reçoit également le signal de correction de sortie du générateur GEN_CORR_2.

Le signal de sortie du quatrième multiplicateur M4_1 est transmis, au rythme de 50 Hz, par une boucle de rétroaction B1, à un cinquième multiplicateur M5_1 disposé entre la sortie de l'oscillateur à commande numérique NCO_C_1 et le deuxième multiplicateur M2_1. Le cinquième multiplicateur M5_1 reçoit donc en entrée le signal de sortie du quatrième multiplicateur M4_1 et le signal de sortie de l'oscillateur à commande numérique NCO_C_1, et transmet en sortie leur produit au deuxième multiplicateur M2_1.

Les signaux de sortie des quatrièmes multiplicateurs M4_1 et M4_2 ainsi obtenus représentent alors les erreurs de phases, observées dans une bande de 50Hz dans le cas d'un récepteur fixe, ou de 1000 Hz dans le cas d'un récepteur mobile, liées aux perturbations de propagation seules (hors compensation de la phase de porteuse du signal utile, compensée par ailleurs par la boucle de phase "classique", via les signaux de sortie des discriminateurs arctangeante ARTG_1 et ARTG_2.

Le signal de sortie du quatrième multiplicateur M4_2 est transmis par une boucle de rétroaction B2, à un cinquième multiplicateur M5_2 disposé entre la sortie de l'oscillateur à commande numérique NCO_C_2 et le deuxième multiplicateur M2_2. Le cinquième multiplicateur M5_2 reçoit donc en entrée le signal de sortie du quatrième multiplicateur M4_2 et le signal de sortie de l'oscillateur à commande numérique NCO_C_2, et transmet en sortie leur produit au deuxième multiplicateur M2_2.

Les signaux de sortie des quatrièmes multiplicateurs M4_1 et M4_2 permettent ensuite de compenser les signaux de codes locaux des erreurs de perturbation par simple multiplication complexe (après conjugaison complexe du signal de compensation) par les cinquièmes multiplicateurs M5_1, M5_2.

La présente invention permet d'améliorer à la fois les mesures de pseudo-distances et de phases, ainsi que de contribuer à augmenter l'intégrité des mesures de phases ainsi obtenues.

## Revendications

1. Récepteur bi-fréquences (L1, L2) de positionnement par satellites, comprenant un canal de mesure principal (L1) et un canal secondaire (L2) pour un calcul de correction de la propagation ionosphérique robuste aux erreurs différentielles de phase liées à l'environnement local de réception des signaux, chaque canal comprenant un générateur de phase de code, un générateur de phase de porteuse, des intégrateurs, des discriminateurs de phase et de code, un oscillateur à commande numérique de phase de code (NCOC), un oscillateur à commande numérique de phase de porteuse (NCOP), des moyens de filtrage adaptés de boucle de phase de porteuse, et des moyens de filtrage adaptés de boucle de phase de code, **caractérisé en ce qu'**il comprend :
- des moyens de détermination des erreurs de phases de code et de porteuse respectives sur lesdits canaux principal et secondaire comprenant des moyens de corrélation interspectrale (INT3, M3) des signaux des canaux principal et secondaire (L1, L2) déjà corrélés par le code local, après compensation en fréquence des décalages Doppler relatifs desdits signaux ; et
- des boucles (B1, B2) respectives de rétroaction desdites erreurs de phases de code et de porteuse sur lesdits canaux principal et secondaire.

2. Récepteur selon le revendication 1, dans lequel lesdits moyens de détermination comprennent des moyens de compensation en effet Doppler (C_D) desdits signaux.

3. Récepteur selon l'une des revendications précédentes, dans lequel lesdits moyens de détermination comprennent des moyens de compensation du signal de sortie desdits moyens dédiés de corrélation interspectrale (INT3, M3) par les erreurs de phases de porteuses respectives desdits signaux, spécifiques à l'environnement local de réception pour une part et à la propagation du signal pour l'autre part, pour transmettre les signaux résultants dans lesdites boucles (B1, B2).

4. Procédé de réception bi-fréquences (L1, L2) de positionnement par satellites, par un canal de mesure principal (L1) et un canal secondaire (L2) pour calculer une correction de la propagation ionosphérique, dans lequel :
- on détermine des erreurs de phases de code et de porteuse respectives sur lesdits canaux principal et secondaire par corrélation interspectrale (INT3, M3) des signaux des canaux principal et secondaire (L1, L2) déjà corrélés par le code local, après compensation en fréquence des décalages Doppler relatifs desdits signaux ; et
- on effectue des boucles (B1, B2) respectives de rétroaction desdites erreurs de phases de code et de porteuse sur lesdits canaux principal et secondaire.
